# EUROPEAN PATENT APPLICATION

(11) **EP 2 187 593 A1**
(43) Date of publication of application: **19.05.2010**
(21) Application number: 08291076.1
(22) Date of filing: 17.11.2008
(51) Int. Cl.: H04L 29/06, G06F 17/30

(54) **Method, system and devices for assembling a multimedia asset and subsequent provisioning to a client device**

(71) Applicant: Alcatel Lucent, 75008 Paris (FR)
(72) Inventor: Huysegems, Rafaël, 2800 Walem (Mechelen) (BE); Verzijp, Nico Victor, 2018 Antwerpen (BE); Van den Berghe, Steven, 9620 Zottegem (BE)
(74) Representative: Narmon, Gisèle Marie Thérèse

(57) **Abstract**

The present invention relates to a Method for assembling a multimedia asset and subsequent provisioning of said multimedia asset to a client device, a related system, a related multimedia asset assembly device and a related client device for assembling a multimedia asset and subsequent provisioning of the multimedia asset to a client device. This method comprises the step of assembling the multimedia asset by selecting a subset of multimedia fragments from a plurality of multimedia fragments. The fragments of the subset of multimedia fragments are determined based on a personal path through a play-map where the play-map indicates relationships between the multimedia fragments of the plurality of multimedia fragments. The step of determining the personal path through the play-map additionally is based on at least one user signal from the client device. The at least one user signal indicating customer preferences of an end-user of the client device.

## Description

The present invention relates to a Method for assembling a multimedia asset and subsequent provisioning of said multimedia asset to a client device according to the preamble of claim 1, a related system according to the preamble of claim 3, a related multimedia asset assembly device according to the preamble of claim 5 and to a related client device according to the preamble of claim 7.

Today, multimedia production and distribution for various content-types such as video and audio is organized in a similar way. For video, directors shoot from several camera positions and with multiple takes. After some post-processing, the selected fragments are cut and assembled to become the final cut while scene-transition effects are added. The result of the post-production is always a 'ready to consume' product. This product is then distributed through various channels such as DVD, broadcasting, Video on Demand, etc to the consumers. If alternative or complementary cuts are not used in the final cut, they become generally unavailable to the public. While watching, the customer has no other option then to watch the exact sequence and duration that came out of the post-production process.

The major problem with this kind of multimedia delivery chains is the lack of possibilities to personalize the content. Currently, the only form of "*personalization*" available today is the fast-forward or jump-to-scene option that consumers can use. In this way, the final cut can be adapted in time or can be personalized in content by skipping fragments or scenes that match a certain type. For example a customer who skips consequently all sport items in his daily news performs in fact content personalization. Of course, these are very coarse-grained forms of personalization. For news items, this way of working is feasible but for other types of media such as movies, soaps, documentaries, this it is often breaking the story line. Assisted forms of personalization, both in duration and in content are made impossible by the rigid way the post-production is organized today.

Another system is disclosed in *European patent application with reference* EP1956501 *and title "Media Article Composition".* Therein, a Device for multimedia asset assembly is described. Such a multimedia asset, called multimedia article, is built up of a selection of multimedia fragments, called media objects, selected from a plurality of multimedia fragments, maintained in a multimedia storage. These multimedia fragments, being associated with a play-map, called a template. The play-map, indicates the relationships between the multimedia fragments. Such a device for multimedia asset assembly comprises means for determining a personal path through the play-map for making the selection of multimedia fragments for provisioning to a user device, from the plurality of multimedia fragment maintained in the storage.

In this way, the previous pre-assembled multimedia content being the final cut is replaced by a "package of video fragments". Together with the fragments, a play-map is provided to indicate how the fragments could be played. The device for multimedia asset assembly will then compose on the fly a personal play-out using these fragments in combination with the play-map. To enable the assembly of an asset assembly play-out per end-device or consumer device in addition to the play-map and the multimedia fragments is used.

Still this media asset assembly device does not allow personalizing the media asset for play out sufficiently as the personalized play-out is still very static.

An object of the present invention is to provide a device for multimedia asset assembly of the above known type but wherein the asset assembly is performed in a way allowing a better and more dynamic personalization.

A further object of the present invention is to provide with a device for multimedia asset assembly of the above known type but wherein the asset assembly is dealt with in a more flexible way.

According to the invention, this object is achieved by the method for assembling a multimedia asset and subsequent provisioning of said multimedia asset to a client device as described in claim 1, the system according to claim 3, the related multimedia asset assembly device according to claim 5 and the related client device according to claim 7.

Indeed, by in addition to the determining of the personal path through the play-map for selection of multimedia fragments from the plurality of multimedia fragments maintained in the multimedia asset storage, using user signals of the end-users indicating preferences of such a user and hence providing with the options to directly or indirectly select or modify the determined personal path, an improved personalization of the personal path and as a consequence of the provisioned asset can be obtained. By in addition using this user signal of the end-user, a selection can be made from alternative fragments such as duration reduced fragments, kids-friendly alternatives, camera-viewpoint alternatives etc. from this plurality of such multimedia fragments.

Such a multimedia fragment is a discrete asset which may be a video asset, an audio asset or a combination of both.

The play-map contains play-out information of the selected set of multimedia items where the play-map amongst others contains:
- Information on the sequence of the fragments (pointer to the next fragment or list of possible next fragments) and/or
- Information on how fragments could be replaced by alternative fragments and /or
- Information on how fragment must be combined during play-out (e.g. specifying the screen composition when multiple video-windows must be displayed at the same time on one physical screen or combining a number of related audio fragments with the primary video fragment).

Another characterizing embodiment of the present invention is described in the method according to claim 2, the related system according to claim 4 and the related multimedia asset assembly device according to claim 6.

The multimedia asset assembly device further is adapted to provision the multimedia asset that includes the subset of multimedia fragments on the personal path to the client device.

An additional advantage is that the solution is more bandwidth efficient in comparison with the solution of the prior art due to the fact that the more optimized personalization leads to better bandwidth usage as only media assets are downloaded that are desired by the user.

Another characterizing embodiment of the present invention is described in the method according to claim 8.

In addition to the determining of the personal path through the play-map using user signals of the end-users indicating preferences of such a user, the personal path through the play-map could be based on at least one further user signal from a further client device. Such a further client device might be the device of a person associated to the user like a friend, buddy or relative.

By using preferences of the further user device being used by a friend, buddy or relative the possibility is provided to even better select or modify the determined personal path, and an even improved personalization of the personal path and as a consequence of the provisioned asset can be obtained.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:

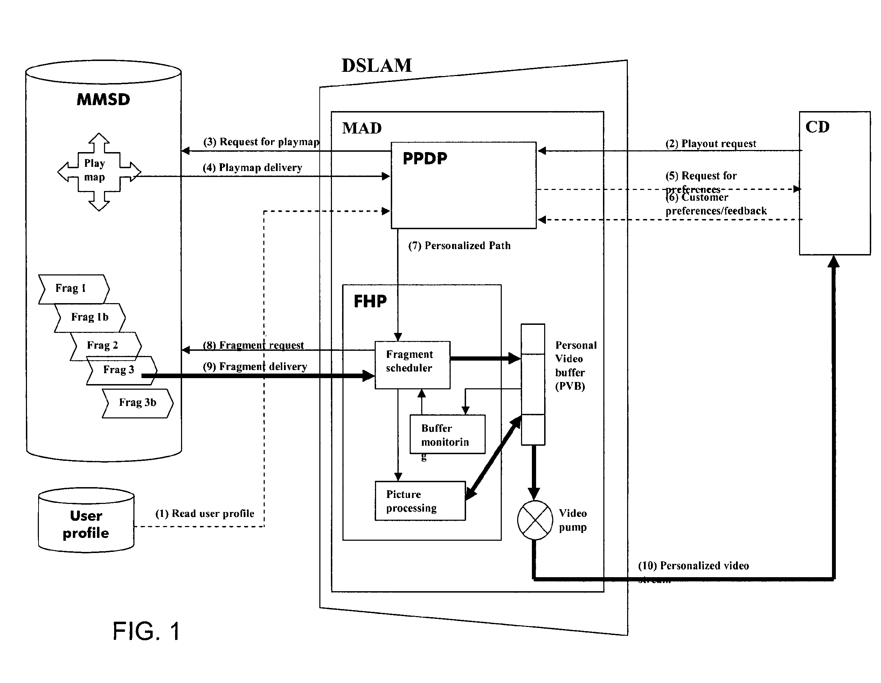

Fig. 1 represents a functional representation of the system for multimedia asset assembly, and provisioning according to the present invention the system including the multimedia asset assembly device MAD and the related client device CD.

In the following paragraphs, referring to the drawing in Fig.1, an implementation of the method and the related devices according to the present invention will be described. In the first paragraph of this description the main elements of this network as presented in FIG. 1 are described. In the second paragraph, all connections between the before mentioned network elements and described means are defined.

Subsequently all relevant functional means of the mentioned system as presented in FIG.1 are described followed by a description of all interconnections. In the succeeding paragraph the actual execution of the communication system is described.

The essential elements of the present invention first are the multimedia asset assembly device MAD that is able to assemble a multimedia asset based on a play-map, a plurality of multimedia fragments, customer preferences and/or feedback during play-out. Further there is the multimedia fragment storage device MMSD for storing the multimedia fragments of the plurality of multimedia fragments. Finally there is a client device that is adapted to receive the multimedia asset built up of multimedia fragments from a subset of multimedia fragments that are selected from the plurality of multimedia fragments. In this embodiment the multimedia asset assembly device is incorporated in a digital subscriber line access multiplexer DSLAM close to the customer premises. The client device in this embodiment is chosen to be, but not limited to, a set top box at the customer premises. Alternatively this may be a PC, a game console, or even a mobile device.

The multimedia fragment storage device MMSD is a storage device in this embodiment chosen to be a vault in the core network being accessible globally or a multimedia server that is located in the edge of the access network. The multimedia asset assembly device MAD is coupled to the client device CD over a digital subscriber line, like ADSL and subsequent subscriber premises network. The multimedia asset assembly device MAD further is coupled to the multimedia fragment storage device MMSD over the access network.

For walled garden IPTV solutions, the MMSD is located in the edge of the access network. For Internet-TV, the MMSD is located somewhere in the Internet. In case of Internet-TV, the multi-media content can be transported using CDN caches to the access-edge network.

The Multimedia asset assembly Device MAD comprises a personal path determination part PPDP that is adapted to determine a personal path through a play-map for selecting the subset of multimedia fragments from a plurality of multimedia fragments where the fragments of the subset of multimedia fragments are determined based on a personal path through the play-map. In addition the personal path determination part PPDP is adapted to determine the personal path through the play-map additionally based on at least one user signal from the client device where the at least one user signal indicates a customer preference of an end-user of the client device CD. The play-map information may be stored locally in the media asset assembly device, within the multimedia fragment storage device MMSD together with the multimedia fragments or alternatively on an even different device somewhere in the network).

The Multimedia asset assembly Device MAD may temporarily load the play-map for handling the play-out and dealing with the media assembly. Then after play out and asset assembly the play-map is not needed anymore.

The multimedia asset assembly Device MAD further comprises a fragment handling part FHP that is adapted to provision the multimedia asset including the subset of multimedia fragments on the personal path to the client device CD.

The personal path determination part PPDP is coupled with an output to an input of the fragment handling part FHP. The personal path determination part PPDP further has a first input that is at the same time an input of the multimedia asset assembly Device MAD that is coupled to an output of the multimedia fragment storage device MMSD for receiving the play-map of a certain requested asset and a second input that is at the same time an input of the multimedia asset assembly Device MAD and is coupled to an output of the client device CD for receiving customer preferences and feedback of an end user of the client device.

The fragment handling part FHP further has an input that is at the same time an input of the multimedia asset assembly Device MAD and is coupled to an output of the multimedia fragment storage device MMSD for receiving multimedia fragments at request. The fragment handling part FHP in addition has an output that is at the same time an output of the multimedia asset assembly Device MAD and is coupled to an input of the client device CD that is adapted for receiving a multimedia asset consisting of a subset of multimedia asset fragments.

In order to explain the present invention it is assumed that the end-user of the client device CD has selected a certain multimedia asset using its remote control and television set coupled to the set top box CD. It is assumed that this multimedia asset is a video asset.

As the personal path determination part PPDP is responsible for the calculation of a personalized path through the play-map and for the selection of relevant fragments and transitions, the personal path determination part PPDP at startup time, will fetch the user profile (which is optional). When the user wants to watch the chosen video asset, the PPDP will fetch the play-map of the requested video from a cache in the network or from the multimedia fragment storage device MMSD. When required by the play-map, the user is prompted for his preferences. These preferences could be style-types (action, romance, discussion, scenery, horror, fashion, adult, etc) as well as duration. The personal path determination part PPDP then will be based on the play-map, the profile and/or on the customer preferences, calculate the best fitting Personal Path PP through the play-map and pass this Personal path PP to the Fragment Handling part FHP. Besides a unique identification per fragment, the PP also indicates the transition effects to be applied by the Fragment Handler.

After the initial Personal Path is passed to the Fragment Handling part FHP, the personal path determination part PPDP keeps track of the play-out and performs path re-calculations if required. A recalculation could be required when the user changes his preferences or provides feedback during play-out or when the user-profile is updated. In this case, the PPDP taking into account the actual position in the play-out of the current Personal Path will calculate a new Personal path for the remaining fragments. The personal path determination part PPDP will then pass the new Personal Path to the fragment handling part FHP.

In addition to the determining of the personal path through the play-map using user signals of the end-users indicating preferences and/or a user-profile of such a user, the personal path through the play-map could be based on at least one further user signal from a further client device. Such a further client device might be the device of a person associated to the user like a friend, buddy or relative.

By using preferences of the further user device being used by a friend, buddy or relative the possibility is provided to even better select or modify the determined personal path, and an even improved personalization of the personal path and as a consequence of the provisioned asset can be obtained.

The Fragment Handling part FHP is adapted to assure a continuous stream towards the user. The Fragment Handling part FHP will receive a personalized path with fragments and transition effects from the personal path determination part PPDP. It will contact the content store or caches on a need-by basis to plan a timely delivery of the video fragments. These requests to the video caches could contain restrictions such as a delivery deadline per fragment. The Fragment Handling part FHP will permanently monitor the Personal Video Buffer PVB and will schedule its requests to the video-caches in such a way that a buffer overrun or under-run (resulting in a "non-video" experience for the customer) is avoided. If specified in the Personal Path PP, the Fragment Handling part FHP will also perform the required picture processing to transit from one fragment to another.

The multimedia asset assembly device MAD may contain for each end-user/end-device CD a dedicated video buffer or a set of fragment-references.

This buffer contains a few minutes of video storage per user. Packets or the reference to packets that have been played out already could be kept in the buffer for a number of seconds to allow the Set Top Box (CD) at the customer premises to request retransmission(s).

The task of the video pump is to transform the video data in the buffer into a regular stream as expected by the STB at the customer premises.

It is to be noted that such a multimedia asset could be a video asset, an audio asset or a combination of both.

In alternative embodiments, the MAD device could be located anywhere on the path between STB and the MMSD. This could be in a network device such as a DSLAM or Edge Router but could also be in a server that is connected to the network. It is also possible to physically separate PPDP and FHP in such as way that they run on different physical entities in the network.

The co-location of MMSD and MAD on a user controlled device creates an autonomous device that is capable of delivering a personalized experience. Such system could be used to play content that is distributed on a persistent medium (DVD, flash-memory device) in a personalized way.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. Method for assembling a multimedia asset and subsequent provisioning of said multimedia asset to a client device (CD), said method comprising the step of assembling said multimedia asset by selecting a subset of multimedia fragments from a plurality of multimedia fragments, said fragments of said subset of multimedia fragments being determined based on a personal path through a play-map, said play-map indicating relationships between said multimedia fragments of said plurality of multimedia fragments, **CHARACTERISED IN THAT** the step of determining said personal path through said play-map additionally is based on at least one user signal from said client device (CD), said at least one user signal indicating at least one customer preference of an end-user of said client device (CD).

2. Method for assembling a multimedia asset and subsequent provisioning of said multimedia asset to a client device (CD), according to claim 1, **CHARACTERISED IN THAT** said method further comprises the step of provisioning said multimedia asset including said subset of multimedia fragments on said personal path to said client device (CD).

3. System for multimedia asset assembly asset and subsequent provisioning of said multimedia asset to a client device (CD), said system comprising a multimedia assembly device (MAD), coupled to said client device (CD) over a communications link, for assembling said multimedia asset by selecting a subset of multimedia fragments from a plurality of multimedia fragments, said fragments of said subset of multimedia fragments being determined based on a personal path through a play-map, said play-map indicating relationships between said multimedia fragments of said plurality of multimedia fragments, said plurality of multimedia fragments being stored in a multimedia fragment storage device (MMSD), said multimedia fragment storage device (MMSD) being coupled to said multimedia asset assembly device (MAD) over a second communications link, **CHARACTERISED IN THAT** said system further is adapted to determine a personal path through said play-map additionally based on at least one user signal from said client device (CD), said at least one user signal indicating at least one customer preference of an end-user of said client device (CD).

4. System for multimedia asset assembly asset and subsequent provisioning of said multimedia asset to a client device (CD), according to claim 3, **CHARACTERISED IN THAT** said system further comprises a fragment handling part (FHP), adapted to provision said multimedia asset including said subset of multimedia fragments on said personal path to said client device (CD).

5. Multimedia asset assembly Device (MAD), for use in a system according to claim 3, said Multimedia asset assembly Device (MAD), comprising a personal path determination part (PPDP), adapted to determine said personal path through said play-map for selecting said subset of multimedia fragments from a plurality of multimedia fragments, said fragments of said subset of multimedia fragments being determined based on a personal path through said play-map, **CHARACTERISED IN THAT** said personal path determination part (PPDP), further is adapted to determine said personal path through said play-map additionally based on at least one user signal from said client device (CD), said at least one user signal indicating at least one customer preference of an end-user of said client device (CD).

6. Multimedia asset assembly Device (MAD) according to claim 5, **CHARACTERISED IN THAT** said device further comprises a fragment handling part (FHP), adapted to provision said multimedia asset including said subset of multimedia fragments on said personal path to said client device (CD).

7. Client device (CD), for use in a system according to claim 3, **CHARACTERISED IN THAT** said client device is adapted send at least one user signal for indicating at least one customer preference of an end-user of said client device (CD).

8. Method for assembling a multimedia asset and subsequent provisioning of said multimedia asset to a client device (CD), according to claim 1, **CHARACTERISED IN THAT** said step of determining said personal path through said play-map additionally is based on at least one user signal from a further client device.
